# EUROPÄISCHE PATENTSCHRIFT

(11) **EP 2 637 129 B1**
(45) Veröffentlichungstag und Bekanntmachung des Hinweises auf die Patenterteilung: **10.08.2016**
(21) Anmeldenummer: 13001062.2
(22) Anmeldetag: 01.03.2013
(51) Int. Cl.: G06K 19/077

(54) **Verfahren zum Freilegen einer Kontaktierungseinrichtung einer elektrischen Komponente in einem portablen Datenträger**
Method for exposing a contacting device of an electrical component in a portable data storage medium
Procédé de mise à nu d'un dispositif de mise en contact d'un composant électrique dans un support de données portable

(30) Priorität: 05.03.2012 DE 102012004485
(43) Veröffentlichungstag der Anmeldung: 11.09.2013
(73) Patentinhaber: Giesecke & Devrient GmbH, 81677 München (DE)
(72) Erfinder: Baldischweiler, Michael, 81825 München (DE)

(56) Entgegenhaltungen:
- EP-A1- 2 239 692
- EP-A2- 1 367 533
- DE-A1- 19 958 328
- US-A1- 2012 040 128

## Beschreibung

Die vorliegende Erfindung betrifft ein Verfahren zum Freilegen einer Kontaktierungseinrichtung einer elektrischen Komponente in einem Datenträgerkörper für einen portablen Datenträger, ein Verfahren zur Herstellung eines portablen Datenträgers, sowie einen entsprechenden Datenträgerkörper und Datenträger.

Portable, meist kartenförmige Datenträger, insbesondere Chipkarten, werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Um eine effiziente Herstellung der Chipkarte zu ermöglichen, wird der integrierte Schaltkreis bei einer Vielzahl von Herstellungsverfahren zunächst in ein Chipmodul verpackt und anschließend wird das Chipmodul in den Kartenkörper implantiert.

Eine Kommunikation mit dem integrierten Schaltkreis kann über ein Kontaktfeld der Chipkarte abgewickelt werden, das hierzu von einer Kontaktierungseinheit eines Lesegeräts berührend kontaktiert wird. Alternativ oder zusätzlich zur Kommunikation über das Kontaktfeld kann eine kontaktlose Kommunikation vorgesehen sein. Hierzu kann der Kartenkörper eine Antenne aufweisen, die beim Einbau des Chipmoduls mit dem integrierten Schaltkreis elektrisch leitend verbunden wird. Abhängig vom Einsatzgebiet der Chipkarte kann der Kartenkörper außer der Antenne auch andere oder weitere elektrische Komponenten aufweisen, die beim Einbau des Chipmoduls mit dem integrierten Schaltkreis elektrisch leitend verbunden werden. Zur Kontaktierung des Chipmoduls mit der Antenne, welche beispielsweise aus einem isolierten Kupferdraht gewickelt sein kann, muss zunächst eine Kontaktierungseinrichtung der Antenne freigelegt werden. Dazu wird in der Regel mittels eines Fräswerkzeugs ein Sackloch im Bereich der Kontaktierungseinrichtung gebildet. Das Fräswerkzeug fährt solange in den Kartenkörper ein, bis die Isolierung entfernt ist und die Kontaktierungseinrichtung freiliegt. Auf die freiliegende Kontaktierungseinrichtung wird dann beispielsweise ein elastisches, elektrisch leitfähiges Material, ein sogenannter Bump, aufgebracht, über das eine elektrische Verbindung zu dem Chipmodul herstellbar ist. Ein derartiges Verfahren ist aus der EP 1367 533 A2 bekannt.

Anspruch 1 ist gegen dieses Dokument abgegrenzt.

Nachteilig bei dem genannten Verfahren ist, dass die Materialstärke der Kontaktierungseinrichtung durch das Fräsen geschwächt wird, so dass die Bruchgefahr erhöht wird. Ferner kann die Kontaktierungseinrichtung beim Fräsen abgerissen werden. Bleibt der Fräser zu lange auf einer Stelle stehen, können dadurch ebenfalls mechanische Beschädigungen der Kontaktierungseinrichtung entstehen. Außerdem kann es vorkommen, dass die Übergänge zwischen der üblicherweise metallischen Kontaktierungseinrichtung und dem Datenträgerkörper aus Kunststoff, wie PVC, verschmieren. Durch den Kontakt mit der metallischen Kontaktierungseinrichtung nutzt sich das Fräswerkzeug zudem schnell ab. Darüber hinaus ist die Haftung von elektrisch leitfähigem Material ("Bump") auf der gefrästen, glatten und aus unterschiedlichen Materialien bestehenden Fläche schlecht.

Die US2012/0040128 beschreibt ein Verfahren zum Transferieren einer Antennenstruktur auf eine RFID-Komponente. Um eine bessere Haftung der Antennenstruktur im Substrat zu erzielen wird mittels Laser ein Graben erzeugt und die Oberfläche dabei gleichzeitig aufgeraut.

Aufgabe der vorliegenden Erfindung ist es daher, ein Verfahren zum Freilegen einer Kontaktierungseinrichtung einer elektrischen Komponente in einem Datenträgerkörper für einen portablen Datenträger vorzuschlagen, das Beschädigungen der Kontaktierungseinrichtung vermeidet und zudem eine verbesserte Haftung zwischen der Kontaktierungseinrichtung und einem gegebenenfalls aufzubringenden elektrisch leitfähigen Material ermöglicht.

Diese Aufgabe wird durch ein Verfahren zum Freilegen einer Kontaktierungseinrichtung einer elektrischen Komponente in einem Datenträgerkörper für einen portablen Datenträger, ein Verfahren zur Herstellung eines portablen Datenträgers, sowie einen entsprechenden Datenträgerkörper und Datenträger mit den Merkmalen der unabhängigen Ansprüche gelöst. Vorteilhafte Ausgestaltungen und Weiterbildungen sind in den abhängigen Ansprüchen angegeben.

Zum Freilegen einer Kontaktierungseinrichtung einer elektrischen Komponente, insbesondere einer Antenne, in einem Datenträgerkörper für einen portablen Datenträger, insbesondere eine Chipkarte, wird zunächst im Bereich der Kontaktierungseinrichtung eine Ausnehmung, insbesondere ein Sackloch, mechanisch gebildet, beispielsweise gefräst. Die Kontaktierungseinrichtung wird dabei jedoch noch nicht freigelegt. Erfindungsgemäß wird die Kontaktierungseinrichtung in der Ausnehmung mittels eines Lasers freigelegt. Dies erfolgt derart, dass die Oberfläche der Kontaktierungseinrichtung dabei aufgeraut wird.

Die Parameter des Lasers, wie Energie, Frequenz oder dergleichen, werden dabei so eingestellt, dass das Material des Datenträgerkörpers abgetragen wird, dabei die Kontaktierungseinrichtung jedoch nicht beschädigt wird. Es wird lediglich die Oberfläche der Kontaktierungseinrichtung aufgeraut. Dadurch kann die Haftung zwischen der Kontaktierungseinrichtung und einem danach aufzubringenden elektrisch leitfähigen Material ("Bump") verbessert werden. Zum einen wird die Haftoberfläche zwischen dem elektrisch leitfähigen Material und der Kontaktierungseinrichtung vergrößert, da die Kontaktierungseinrichtung nicht mit abgetragen und somit nicht eingeebnet wird. Zum anderen wird die Haftung zwischen dem elektrisch leitfähigen Material und der Kontaktierungseinrichtung durch das Aufrauen der Oberfläche der Kontaktierungseinrichtung im Vergleich zu einer glatten Oberfläche der Kontaktierungseinrichtung verbessert. Dazu ist es vorteilhaft, die Oberflächenrauigkeit so an das - gegebenenfalls elastische - elektrisch leitfähige Material, insbesondere dessen Parameter wie Viskosität und Elastizität, anzupassen, dass das elektrisch leitfähige Material an der Oberfläche der Kontaktierungseinrichtung gut anhaften kann.

Weiter vorteilhaft ist, dass die Kontaktierungseinrichtung selbst nicht beschädigt wird, wodurch eine Erhöhung der Bruchgefahr bei mechanischer Belastung des Datenträgerkörpers vermieden wird. Außerdem tritt kein erhöhter Verschleiß des Werkzeugs auf, mit dem die Ausnehmung mechanisch gebildet wird, da das Werkzeug lediglich das Kunststoffmaterial des Datenträgerkörpers bearbeitet und nicht in Kontakt mit der insbesondere metallischen Kontaktierungseinrichtung kommt.

Vorteilhaft wird die Ausnehmung in dem Datenträgerkörper nur bis zu einer Tiefe gebildet, in der noch eine minimale Materialstärke verbleibt, welche die Kontaktierungseinrichtung abdeckt. Mit anderen Worten, die Ausnehmung reicht bis auf einen minimalen Abstand an die Kontaktierungseinrichtung heran, ohne dass die Kontaktierungseinrichtung freigelegt wird. Diese minimale verbleibende Materialstärke wird dabei insbesondere auch von dem Material des Datenträgerkörpers und dem Werkzeug, mit dem auf mechanische Weise die Ausnehmung gebildet wird, beeinflusst.

Weiter vorteilhaft wird die minimale Materialstärke mittels eines Lasers abgetragen, um die Kontaktierungseinrichtung freizulegen. Da die verbleibende Materialstärke minimal ist, wird ein Großteil der Ausnehmung mechanisch, beispielsweise durch Fräsen, gebildet. Mittels des Lasers erfolgt dann das eigentliche Freilegen der Kontaktierungseinrichtung. Dabei muss nur noch die minimale Materialstärke, die die Kontaktierungseinrichtung bedeckt, entfernt werden. Ebenso wird das Material des Datenträgers um die Kontaktierungseinrichtung herum entfernt. Die Kontaktierungseinrichtung wird, wie eingangs beschrieben, nur aufgeraut, bleibt aber sonst unbeschädigt.

In einer bevorzugten Ausgestaltung wird die Kontaktierungseinrichtung mittels des Lasers soweit freigelegt, dass sie zumindest teilweise hinterschnitten wird. Durch das Bilden einer Hinterschneidung, mit anderen Worten durch das Freilegen von Oberflächenanteilen der Kontaktierungseinrichtung, welche von der Oberfläche des Datenträgerkörpers, von der aus die Ausnehmung gebildet wird, wegweisen, kann die Haftung zwischen dem elektrisch leitfähigen Material und der Kontaktierungseinrichtung weiter verbessert werden. Insbesondere wird die Stabilität hinsichtlich Zugbeanspruchung senkrecht zum Datenträgerkörper verbessert, da das elektrisch leitfähige Material die Kontaktierungseinrichtung zumindest teilweise umschließen kann.

Insbesondere ist es vorteilhaft, nach dem Freilegen der Kontaktierungseinrichtung eine elektrisch leitfähige Substanz, wie vorzugsweise eine Silberleitpaste, in die Ausnehmung einzubringen, so dass die Kontaktierungseinrichtung von der elektrisch leitfähigen Substanz kontaktiert wird. Insbesondere ist dies vorteilhaft, wenn die Kontaktierungseinrichtung mittels des Lasers hinterschnitten wurde. In die Hinterschneidungen kann dann die elektrisch leitfähige Substanz, wie eine Silberleitpaste fließen. Die Substanz kann dabei entweder nur in den Bereich der Hinterschneidungen eingebracht werden oder die Kontaktierungseinrichtung vollständig bedecken. Durch Vorsehen einer elektrisch leitfähigen Substanz, wie einer Silberleitpaste, vor dem Einbringen des elektrisch leitfähigen Materials ("Bump"), kann die elektrisch leitfähige Kontaktfläche zwischen der Kontaktierungseinrichtung und dem Bump vergrößert werden.

Für den Fall, dass die Kontaktierungseinrichtung einen metallischen Draht mit einer Isolierung umfasst, wird vorteilhafterweise die Isolierung beim Freilegen der Kontaktierungseinrichtung mittels des Lasers zumindest teilweise entfernt. Das Entfernen der Isolierung des Drahtes und das Freilegen des Drahtes mittels des Lasers können nach dem mechanischen Bilden der Ausnehmung somit in einem Schritt erfolgen.

Bei der Herstellung eines portablen Datenträgers wird zunächst ein Datenträgerkörper mit einer elektrischen Komponente bereitgestellt. Die elektrische Komponente kann insbesondere eine Antenne zur kontaktlosen Kommunikation sein, welche in einer innenliegenden Schicht des Datenträgerkörpers eingebettet ist. Die Antenne kann insbesondere einen metallischen Draht, wie einen Kupferdraht umfassen. Die Kontaktierungseinrichtung der elektrischen Komponente, beispielsweise mäanderförmig angeordnete Enden einer Antenne aus Draht, wird dann wie oben beschrieben in einem zweistufigen Verfahren zunächst mechanisch und dann mittels Laser freigelegt. Auf die freigelegte Kontaktierungseinrichtung wird dann ein elektrisch leitfähiges Material ("Bump") aufgebracht, so dass es in elektrischem Kontakt mit der Kontaktierungseinrichtung steht. Schließlich wird ein elektronisches Modul, wie ein Chipmodul, in eine Kavität des Datenträgerkörpers eingebracht, so dass es über das - vorzugsweise elastische - elektrisch leitfähige Material in elektrischem Kontakt mit der der Kontaktierungseinrichtung elektronischen Komponente steht.

Die Erfindung wird im Folgenden mit Bezug auf die beiliegenden schematischen Zeichnungen beispielhaft beschrieben. Darin zeigen:
- Fig. 1: einen portablen Datenträger in Draufsicht mit angedeuteten Antennenwindungen,
- Fig. 2: einen Ausschnitt aus dem Datenträger aus Fig.1 vor dem Implantieren des Chipmoduls,
- Fig. 3: eine Schnittdarstellung des Datenträgers vor dem Fräsen der Ausnehmung zum Freilegen der Kontaktierungseinrichtung,
- Fig. 4: eine Schnittdarstellung des Datenträgers nach dem Fräsen der Ausnehmung zum Freilegen der Kontaktierungseinrichtung,
- Fig. 5: eine Schnittdarstellung des Datenträgers nach dem Freilegen der Kontaktierungseinrichtung mittels eines Lasers,
- Fig. 6: eine Schnittdarstellung des Datenträgers nach dem Einbringen eines elektrisch leitfähigen Materials ("Bump") in die Ausnehmung,
- Fig. 7: eine Schnittdarstellung des Datenträgers nach dem Implantieren eines Chipmoduls,
- Fig. 8: einen Ausschnitt aus der Antennenschicht mit freigelegter Kontaktierungseinrichtung,
- Fig. 9: einen Ausschnitt aus der Antennenschicht mit freigelegter, hinterschnittener Kontaktierungseinrichtung, und
- Fig.10: einen Ausschnitt aus der Antennenschicht mit freigelegter, hinterschnittener Kontaktierungseinrichtung mit Silberleitpaste.

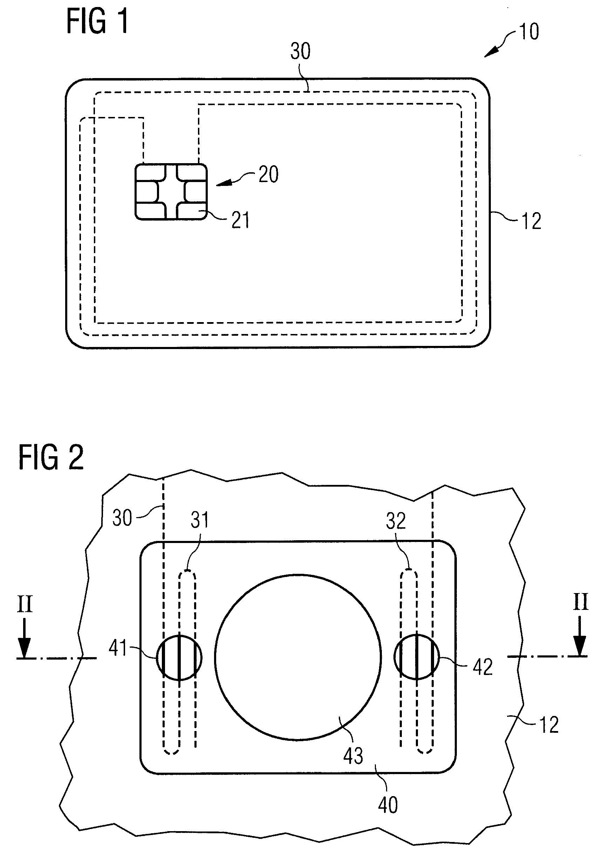

In Fig.1 ist ein portabler Datenträger 10 in Form einer Chipkarte dargestellt. Der Datenträger 10 weist einen Datenträgerkörper 12 auf, in den ein Chipmodul 20 eingebettet ist. Das Chipmodul 20 weist Kontaktflächen 21 zur kontaktbehafteten Kommunikation mit einem entsprechenden Lesegerät auf. In Fig.1 ist zudem eine Antenne 30 zur kontaktlosen Kommunikation und/ oder Energieübertragung angedeutet. Die Antenne kann auf verschiedene bekannte Arten hergestellt sein, insbesondere gedruckt, geätzt, verlegt oder gewickelt. Das Verfahren zum Freilegen einer Kontakteinrichtung einer elektrischen Komponente, wie der Antenne 30, ist nicht auf eine bestimmte Antennenart beschränkt. Bevorzugt wird es jedoch im Falle einer gewickelten Antenne angewendet. Die Antenne 30 umfasst in diesem Fall insbesondere einen Kupferdraht mit einer elektrischen Isolierung, welcher gewickelt und in eine Schicht 14 einbettet wurde. Das Inlay oder die Schicht 14, welche die Antenne umfasst, wird mit anderen Schichten zu einem Datenträgerkörper 12 laminiert, so dass die Schicht 14 insbesondere eine innenliegende Schicht des Datenträgerkörpers 12 bildet.

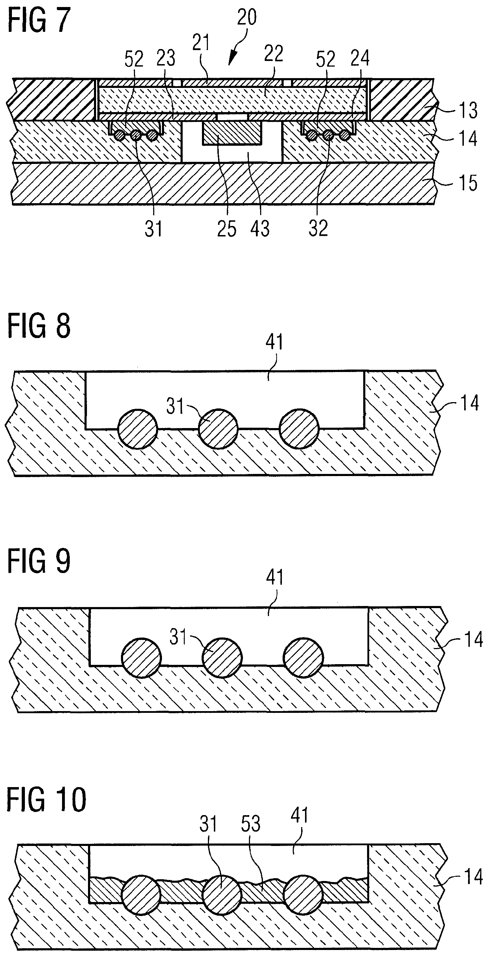

In Fig. 2 ist ein Ausschnitt des Datenträgers 10 im Bereich des Chipmoduls 20 dargestellt, bevor das Chipmodul 20 in den Datenträgerkörper 12 implantiert wurde. Das Chipmodul 20 wird in eine zweistufige Kavität 40 eingebracht, wobei der integrierte Schaltkreis 25 (siehe Fig. 7) in einer Vertiefung 43 der Kavität 40 angeordnet wird. Im Bereich der Kavität 40 liegen die Kontaktierungseinrichtungen 31,32, mit anderen Worten die Anschlussbereiche 31, 32 der Antenne 30 in Form von mäanderförmig angeordneten Enden der Antenne 30. Durch die mäanderförmige Anordnung der Anschlussbereiche 31, 32 wird die Toleranz gegenüber Lageverschiebungen der Antenne 30 erhöht. Fig. 2 zeigt zudem zwei Ausnehmungen 41, 42 in Form von Sacklöchern im Bereich der Anschlussbereiche 31, 32. In den Ausnehmungen 41, 42 liegen die Anschlussbereiche 31, 32 frei.

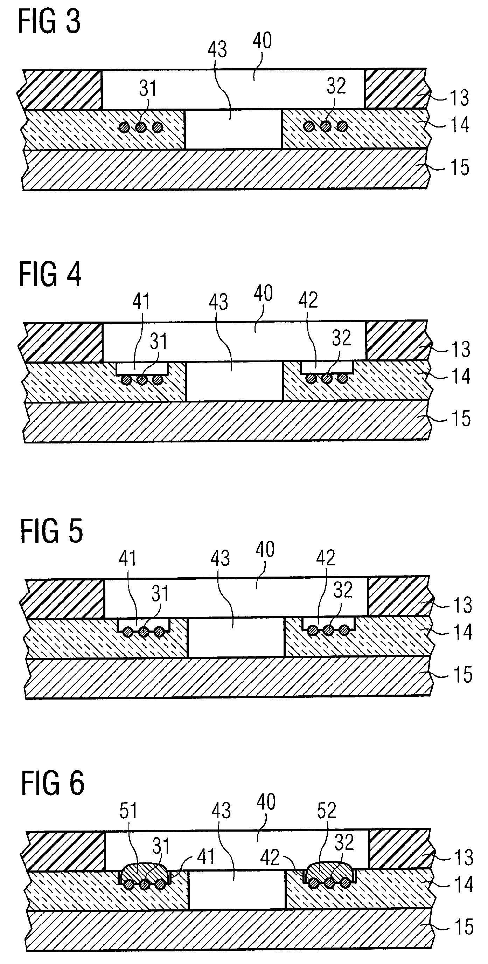

In den Fig. 3 bis 7 sind die einzelnen Verfahrensschritte eines Verfahrens zum Freilegen der Anschlussbereiche 31, 32 der Antenne 30 bis hin zum Implantieren eines Chipmoduls 20 anhand von Schnittdarstellungen des Datenträgerkörpers 12 entlang der Linie II-II in Fig. 2 dargestellt.

Fig. 3 zeigt den Datenträgerkörper 12 mit drei Schichten 13,14,15, in den bereits eine Kavität 40,43 für das Chipmodul 20 eingebracht wurde. Die Anschlussbereiche 31, 32 liegen nicht frei, sondern sind vollständig in der Schicht 14 eingebettet. In Fig. 4 ist der Datenträgerkörper 12 nach dem Fräsen der Ausnehmungen 41, 42 dargestellt. Die Ausnehmungen 41, 42 reichen lediglich bis zu einer Tiefe in dem Datenträgerkörper 12, so dass die Antennenschlüsse 31, 32 noch nicht freiliegen. Vielmehr sind die Antennenanschlüsse 31, 32 von einer minimalen Materialstärke des Datenträgerkörpers 12 bedeckt.

Im nächsten Schritt erfolgt nun das Freilegen der Anschlussbereiche 31, 32 mittels Laser. Dabei wird gegebenenfalls auch eine elektrische Isolierung der Antenne 30 in den Anschlussbereichen 31, 32 entfernt. Fig. 5 zeigt den Datenträgerkörper 12 nach dem Freilegen der Anschlussbereiche 31, 32 mittels Laser. Das Kunststoffmaterial des Datenträgers 12 ist um die Antennenschlüsse 31, 32 herum entfernt worden. Die Anschlussbereiche 31, 32 selbst sind unbeschädigt und ragen nun aus dem Boden der Ausnehmungen 41, 42 hervor. Mittels des Lasers wird lediglich die Oberfläche der Antennenschlüsse 31, 32 aufgeraut, um die Haftung eines nun einzubringenden elektrisch leitfähigen Materials zu erhöhen.

Nach dem Freilegen der Anschlussbereiche 31, 32 wird, wie in Fig. 6 dargestellt, ein vorzugweise elastisches, elektrisch leitfähiges Material 51, 52, sogenannte Bumps, in die Ausnehmungen 41, 42 eingebracht und stehen in elektrischem Kontakt mit den Anschlussbereichen 31,32. Nach dem Einbringen der Bumps 51, 52 wird ein Chipmodul 20 in den Datenträgerkörper 12 implantiert. Wie in Fig. 7 dargestellt, weist das Chipmodul ein Substrat 22, einen integrierten Schaltkreis 25 (IC, "Chip"), sowie Kontaktflächen 21 zur kontaktbehafteten Kommunikation auf. Über Kontakte 23, 24 des Chipmoduls 20 wird der integrierte Schaltkreis 25 über die Bumps 51, 52 mit den Anschlussbereichen 31, 32 elektrisch leitend verbunden. Da das Material der Bumps 51, 52 eine gewisse Elastizität aufweist, können mechanische Belastungen des Datenträgers 10 zumindest teilweise kompensiert werden.

In Fig. 8 ist ein vergrößerter Ausschnitt der Schicht 14 mit der Ausnehmung 41 dargestellt, wobei der Anschlussbereich 31 der Antenne 30 freigelegt ist. In diesem Ausführungsbeispiel wurde das Material des Datenträgerkörpers 12 nur im oberen Bereich bis maximal zur Hälfte des Anschlussbereichs 31 entfernt. Im Gegensatz dazu ist in Fig. 9 ein Ausführungsbeispiel dargestellt, bei dem mehr Material des Datenträgerkörpers 12 mittels Laser entfernt wurde, so dass der Anschlussbereich 31 hinterschnitten wurde. Durch Vorsehen einer solchen Hinterschneidung kann die Haftung der Bumps 51, 52 weiter verbessert werden, da das Material der Bumps 51, 52 die Anschlussbereiche 31, 32 zumindest teilweise umschließen kann. In Fig. 10 ist ein Ausführungsbeispiel dargestellt, bei dem die elektrisch leitfähige Kontaktfläche durch Einbringen einer Silberleitpaste 53 vergrößert wurde.

## Patentansprüche

1. Verfahren zum Freilegen einer Kontaktierungseinrichtung (31,32) einer elektrischen Komponente (30) in einem Datenträgerkörper (12) für einen portablen Datenträger (10), wobei in dem Datenträgerkörper (12) im Bereich der freizulegenden Kontaktierungseinrichtung (31, 32) eine Ausnehmung (41,42) mechanisch gebildet wird,
**dadurch gekennzeichnet, dass** die Kontaktierungseinrichtung (31, 32) in der Ausnehmung (41, 42) mittels eines Lasers derart freigelegt wird, dass die Oberfläche der Kontaktierungseinrichtung (31, 32) aufgeraut wird.

2. Verfahren nach Anspruch 1, **dadurch gekennzeichnet, dass** die Ausnehmung (41, 42) in dem Datenträgerkörper (12) bis zu einer Tiefe derart gebildet wird, dass eine minimale, die Kontaktierungseinrichtung (31, 32) abdeckende Materialstärke des Datenträgerkörpers (12) verbleibt.

3. Verfahren nach Anspruch 2, **dadurch gekennzeichnet, dass** die minimale Materialstärke mittels eines Lasers abgetragen wird, so dass die Kontaktierungseinrichtung (31, 32) freigelegt wird.

4. Verfahren nach einem der Ansprüche 1 bis 3, **dadurch gekennzeichnet, dass** die Kontaktierungseinrichtung (31, 32) mittels eines Lasers soweit freigelegt wird, dass sie zumindest teilweise hinterschnitten wird.

5. Verfahren nach einem der Ansprüche 1 bis 4, **dadurch gekennzeichnet, dass** nach dem Freilegen der Kontaktierungseinrichtung (31, 32) eine elektrisch leitfähige Substanz (53), vorzugsweise eine Silberleitpaste, in die Ausnehmung (41, 42) eingebracht wird, so dass die Kontaktierungseinrichtung (31, 32) von der elektrisch leitfähigen Substanz (53) kontaktiert wird.

6. Verfahren nach einem der Ansprüche 1 bis 5, **dadurch gekennzeichnet, dass** eine elektrische Isolierung der einen metallischen Draht umfassenden Kontaktierungseinrichtung (31, 32) beim Freilegen der Kontaktierungseinrichtung (31, 32) mittels eines Lasers zumindest teilweise entfernt wird.

7. Verfahren zur Herstellung eines portablen Datenträgers (10), umfassend die Schritte:
- Bereitstellen eines Datenträgerkörpers (12) mit einer elektrischen Komponente (30),
- Freilegen einer Kontaktierungseinrichtung (31, 32) der elektrischen Komponente (30) gemäß einem der Ansprüche 1 bis 6,
- Einbringen eines elektrisch leitfähigen Materials (51, 52) in die Ausnehmung (41, 42), so dass es in elektrischem Kontakt mit der Kontaktierungseinrichtung (31, 32) der elektrischen Komponente (30) steht, und
- Einbringen eines elektronischen Moduls (20) in eine Kavität (40,43) des Datenträgerkörpers (12), so dass das elektronische Modul (20) über das elektrisch leitfähige Material (51,52) in elektrischem Kontakt mit der Kontaktierungseinrichtung (31, 32) der elektrischen Komponente (30) steht.

8. Verfahren nach Anspruch 7, **dadurch gekennzeichnet, dass** das elektrisch leitfähige Material (51, 52) derart in die Ausnehmung (41, 42) eingebracht wird, dass es die Kontaktierungseinrichtung (31, 32) zumindest teilweise umschließt.

## Claims

1. A method for exposing a contacting device (31, 32) of an electrical component (30) in a data carrier body (12) for a portable data carrier (10), wherein a recess (41, 42) is mechanically formed in the data carrier body (12) in the region of the contacting device (31, 32) to be exposed,
**characterized in that** the contacting device (31, 32) in the recess (41, 42) is exposed by means of a laser such that the surface of the contacting device (31, 32) is roughened.

2. The method according to claim 1, **characterized in that** the recess (41, 42) is formed in the data carrier body (12) to a depth such that a minimum material thickness of the data carrier body (12) remains that covers the contacting device (31, 32).

3. The method according to claim 2, **characterized in that** the minimum material thickness is removed by a laser, so that the contacting device (31, 32) is exposed.

4. The method according to any of the claims 1 to 3, **characterized in that** the contacting device (31, 32) is exposed by means of a laser to such an extent that it is at least partially undercut.

5. The method according to any of the claims 1 to 4, **characterized in that** after exposing the contacting device (31, 32) an electroconductive substance (53), preferably a silver conductive paste, is introduced in the recess (41, 42), so that the contacting device (31, 32) is contacted by the electroconductive substance (53).

6. The method according to any of the claims 1 to 5, **characterized in that** an electrical insulation of the contacting device (31, 32) comprising a metallic wire is at least partially removed when the contacting device (31, 32) is exposed by means of a laser.

7. A method for manufacturing a portable data carrier (10), comprising the steps of:
- making available a data carrier body (12) with an electrical component (30),
- exposing a contacting device (31, 32) of the electrical component (30) in accordance with any of the claims 1 to 6,
- introducing an electroconductive material (51, 52) in the recess (41, 42), so that it is in electrical contact with the contacting device (31, 32) of the electrical component (30), and
- introducing an electronic module (20) in a cavity (40, 43) of the data carrier body (12), so that the electronic module (20) is in electrical contact with the contacting device (31, 32) of the electrical component (30) via the electroconductive material (51, 52).

8. The method according to claim 7, **characterized in that** the electroconductive material (51, 52) is introduced in the recess (41, 42) such that it encloses the contacting device (31, 32) at least partially.

## Revendications

1. Procédé de mise à nu d'un dispositif de mise en contact (31, 32) d'un composant électrique (30) dans un corps de support de données (12) pour un support de données (10) portable, cependant que, dans le corps de support de données (12), dans la zone du dispositif de mise en contact (31, 32) à mettre à nu, un évidement (41, 42) est généré mécaniquement,
**caractérisé en ce que** le dispositif de mise en contact (31, 32) est mis à nu de telle façon au moyen d'un laser dans l'évidement (41, 42) que la surface du dispositif de mise en contact (31, 32) est rendue rugueuse.

2. Procédé selon la revendication 1, **caractérisé en ce que** l'évidement (41, 42) dans le corps de support de données (12) est généré de telle façon jusqu'à une profondeur qu'une épaisseur de matériau du corps de support de données (12) minimale recouvrant le dispositif de mise en contact (31, 32) est conservée.

3. Procédé selon la revendication 2, **caractérisé en ce que** l'épaisseur de matériau minimale est décapée au moyen d'un laser, de telle sorte que le dispositif de mise en contact (31, 32) est mis à nu.

4. Procédé selon une des revendications de 1 à 3, **caractérisé en ce que** le dispositif de mise en contact (31, 32) est mis à nu au moyen d'un laser au point d'être au moins partiellement contre-dépouillé.

5. Procédé selon une des revendications de 1 à 4, **caractérisé en ce que**, après la mise à nu du dispositif de mise en contact (31, 32), une substance électroconductrice (53), de préférence une pâte d'argent conductrice, est introduite dans l'évidement (41, 42), de telle sorte que la substance (53) électroconductrice entre en contact avec le dispositif de mise en contact (31, 32).

6. Procédé selon une des revendications de 1 à 5, **caractérisé en ce qu'**une isolation électrique du dispositif de mise en contact (31, 32) comprenant un fil métallique est au moins partiellement enlevée au moyen d'un laser lors de la mise à nu du dispositif de mise en contact (31, 32).

7. Procédé de fabrication d'un support de données (10) portable, comprenant les étapes:
- mise à disposition d'un corps de support de données (12) ayant un composant électrique (30),
- mise à nu, selon une des revendications de 1 à 6, d'un dispositif de mise en contact (31, 32) du composant électrique (30),
- introduction d'un matériau électroconducteur (51, 52) dans l'évidement (41, 42), de telle sorte qu'il est en contact électrique avec le dispositif de mise en contact (31, 32) du composant électrique (30), et
- introduction d'un module électronique (20) dans une cavité (40, 43) du corps de support de données (12), de telle sorte que le module électronique (20) est, par l'intermédiaire du matériau électroconducteur (51, 52), en contact électrique avec le dispositif de mise en contact (31, 32) du composant électrique (30).

8. Procédé selon la revendication 7, **caractérisé en ce que** le matériau électroconducteur (51, 52) est introduit de telle façon dans l'évidement (41, 42) qu'il entoure au moins partiellement le dispositif de mise en contact (31, 32).
